# EUROPEAN PATENT SPECIFICATION

(11) **EP 3 083 221 B1**
(45) Date of publication and mention of the grant of the patent: **26.12.2018**
(21) Application number: 14787134.7
(22) Date of filing: 15.10.2014
(51) Int. Cl.: B29D 30/06, B29C 33/42

(54) **MOULDING ELEMENT COMPRISING CUTTING MEANS FOR MOULDING AND VULCANIZING A TYRE TREAD**
FORMTEIL MIT SCHNEIDEMITTELN ZUM FORMEN UND VULKANISIEREN EINER REIFENLAUFFLÄCHE
ÉLÉMENT MOULANT COMPORTANT DES MOYENS DE DÉCOUPE POUR LE MOULAGE ET LA VULCANISATION D'UNE BANDE DE ROULEMENT D'UN PNEUMATIQUE

(30) Priority: 17.12.2013 FR 1362803
(43) Date of publication of application: 26.10.2016
(73) Proprietor: Compagnie Générale des Etablissements Michelin, 63000 Clermont-Ferrand (FR)
(72) Inventor: KANEKO, Shuichi, Tokyo 163-1073 (JP)
(74) Representative: Regimbeau
(86) International application number: PCT/EP2014/072135
(87) International publication number: WO 2015/090672

(56) References cited:
- WO-A1-2013/087826
- DE-A1- 19 730 068
- US-A- 3 570 571
- US-B1- 6 892 775

## Description

### FIELD OF THE INVENTION

The present invention relates to the field of moulds for moulding and vulcanizing a tyre tread. More specifically, the invention relates to the moulds used for moulding in the tread grooves which are partially or completely covered by an additional cover layer.

### PRIOR ART

Document US4057089 discloses a pneumatic tyre comprising a tread band. The tread band has a plurality of blocks. Each block extends in a curved manner to one side of the tread band towards the centre of this tread band. More particularly, the blocks are curved along structural curvature of a parabola of the second order.

Document WO2013087826 discloses a moulding element of a mould for moulding and vulcanizing a tyre tread. The moulding element comprises a moulding surface intended to mould part of the tyre tread surface and a rib intended to mould a groove in the tread. In addition, the moulding element comprises two lamellas positioned on either side of the rib at a certain distance from this rib, each lamella comprising a cutting edge, this cutting edge making an acute angle. The cutting means are able to cut a cover layer that covers a green tyre. The rib itself will mould a groove in the tread and at the same time guide part of the cover layer into the groove thus moulded.

It is an object of the present invention to propose a mould for moulding curved blocks with cover layer.

### DEFINITIONS

A "tyre" means all types of elastic tyre whether or not subjected to an internal pressure.

A "green tyre" or "green form" of a tyre means a superposition of a plurality of semi-finished rubber products present in the form of strips or sheets, with or without reinforcement. The green tyre is intended to be vulcanized in a mould in order to obtain the tyre.

The "tread" of a tyre means a quantity of rubber material bounded by lateral surfaces and by two main surfaces one of which is intended to come into contact with a road surface when the tyre is running.

A "tread surface" means the surface formed by those points on the tyre tread that come into contact with the road surface when the tyre is running.

A "mould" means a collection of separate moulding elements which, when brought closer towards one another, delimit a toroidal moulding space.

A "moulding element" of a mould means part of a mould. A moulding element is, for example, a mould segment.

A "moulding surface" of a moulding element means the surface of the mould that is intended to mould the surface of the tyre tread.

A "rib" of a moulding element means a protrusion projecting from the moulding surface. The width of the rib is 2 mm or more.

A "lamella" of a moulding element means a protrusion projecting from the moulding surface. The width of the lamella is less than 2 mm.

A "rib with a rounded end" means that the end of the rib is domed.

An "acute angle" means an angle smaller than 90°.

### SUMMARY OF THE INVENTION

The invention relates to a moulding element according to claim 1 comprising a main lamella and two ribs positioned on either side of the main lamella at a certain distance from this main lamella. The ribs are intended to mould grooves in the tread, this ribs comprising rounded ends. The main lamella comprises cutting edge, this cutting edge making an acute angle. The ribs are curved in their length with a curvature C and in that the lamella is curved with the same curvature C.

Thus, it is possible to mould curved blocks with cover layer in an easy manner.

In addition, the moulding element comprises a plurality of secondary lamellas. Each of these secondary lamellas comprises a cutting edge. The secondary lamellas extend globally perpendicularly to the main lamella.

We make easier the positioning of the cover layer on the walls of the groove moulded by the rib. Indeed, we avoid the presence of a part of the cover layer over the surface contact of the block, since the cover layer is well adapting with the curved form of the block.

In a variant, the pitch between the plurality of secondary lamellas is globally equal along the main lamella.

We improve the cutting of the cover layer.

### BRIEF DESCRIPTION OF THE DRAWINGS

Other features and advantages of the invention will emerge from the following description, given by way of nonlimiting example, with reference to the attached drawings in which:
- **Figure 1** schematically depicts a moulding element not according to the invention;
- **Figure 2** illustrates a moulding element according to the invention.

In the description that follows, elements that are substantially identical or similar will be denoted by identical references.

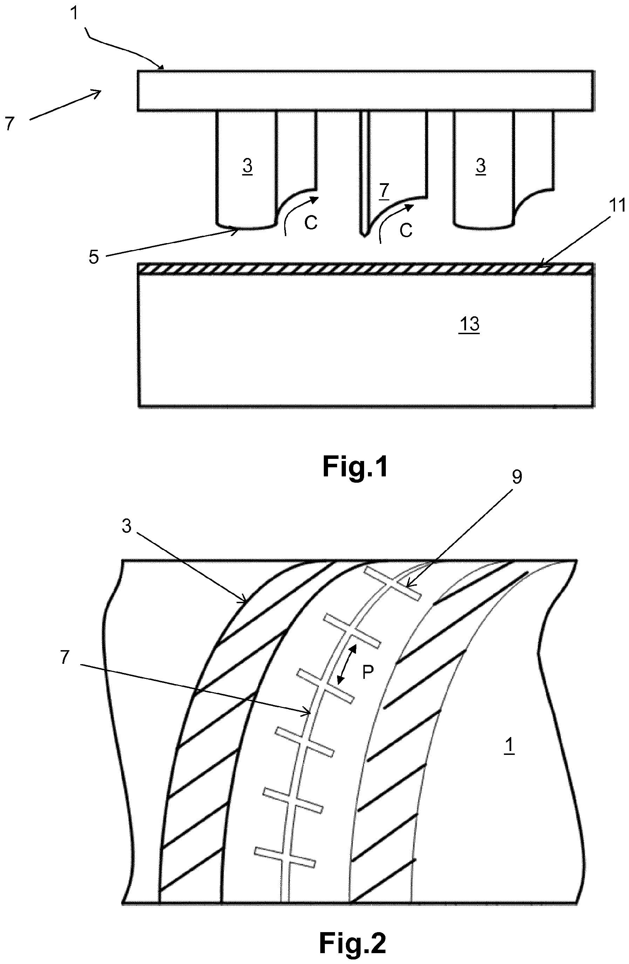

**Figure 1** depicts a moulding element 1 illustrating some principles of the invention. The moulding element 1 comprises one main lamella 7 and two ribs 3 positioned on either side of the main lamella 7 at a certain distance from this main lamella 7. The main lamella 7 comprises cutting edge making an acute angle. The cutting edge is able to cut a cover layer 11 that covers a green tyre 13. In a preferred embodiment, the acute angle is lower than or equal to 60°. In a variant, the acute angle is lower than or equal to 35°. In other variant, the acute angle is lower than or equal to 20°. Each rib 3 comprises a rounded end. This rib will mould a groove in the tread and at the same time guide part of the cover layer into this groove thus moulded.

More particularly, each rib 3 is curved in its length with a curvature C and the main lamella 7 is curved with the same curvature C.

**Figure 2** illustrates an embodiment of the invention. The moulding element 1 comprises a plurality of secondary lamellas. These secondary lamellas extend globally perpendicularly to the main lamella 7. Each of these secondary lamellas comprises a cutting edge for cutting the cover layer. Indeed, the pitch between the plurality of secondary lamellas is globally equal along the main lamella 7.

The invention is not restricted to the examples described and depicted and various modifications can be made thereto without departing from its scope, which is defined by the appended claims.

## Claims

1. Moulding element of a mould for moulding and vulcanizing a tyre tread, this moulding element (1) comprising a main lamella (7) and two ribs (3) positioned on either side of the main lamella (7) at a certain distance from this main lamella (7), the ribs being intended to mould grooves in the tread, the ribs comprising rounded ends (5), the main lamella (7) comprising a cutting edge, the cutting edge making an acute angle, the ribs (3) being curved in their length with a curvature C and the main lamella (7) being curved with the same curvature C, wherein the moulding element (1) comprises a plurality of secondary lamellas (9), each of these secondary lamellas (9) comprising a cutting edge, the secondary lamellas extending globally perpendicularly to the main lamella (7).

2. Moulding element according to Claim 1, **characterized in that** the pitch (P) between the plurality of secondary lamellas (9) is globally equal along the main lamella (7).

## Patentansprüche

1. Formelement einer Form zum Formen und Vulkanisieren einer Reifenlauffläche, wobei das Formelement (1) eine Hauptlamelle (7) und zwei Rippen (3), die auf je einer Seite der Hauptlamelle (7) auf einem bestimmten Abstand von der Hauptlamelle (7) positioniert sind, aufweist, wobei die Rippen zum Formen von Rillen in der Lauffläche vorgesehen sind, die Rippen gerundete Enden (5) aufweisen, die Hauptlamelle (7) eine einen spitzen Winkel bildende Schneidkante aufweist, die Rippen (3) in ihrer Länge mit einer Krümmung C gekrümmt sind und die Hauptlamelle (7) mit der gleichen Krümmung C gekrümmt ist,
wobei das Formelement (1) mehrere Sekundärlamellen (9) aufweist, jede dieser Sekundärlamellen (9) eine Schneidkante aufweist, die Sekundärlamellen sich allgemein rechtwinklig zur Hauptlamelle (7) erstrecken.

2. Formelement nach Anspruch 1, **dadurch gekennzeichnet, dass** die Teilung (P) zwischen den mehreren Sekundärlamellen (9) allgemein gleich entlang der Hauptlamelle (7) ist.

## Revendications

1. Élément de moulage d'un moule pour mouler et vulcaniser une bande de roulement, cet élément de moulage (1) comprenant une lamelle principale (7) et deux nervures (3) placées de chaque côté de la lamelle principale (7), à une certaine distance de cette lamelle principale (7), les nervures étant prévues pour mouler des rainures dans la bande de roulement, les nervures comprenant des extrémités arrondies (5), la lamelle principale (7) comprenant un tranchant, le tranchant faisant un angle aigu, les nervures (3) étant courbes dans leur longueur avec une courbure C et la lamelle principale (7) étant courbe avec la même courbure C, dans lequel l'élément de moulage (1) comprend une pluralité de lamelles secondaires (9), chacune de ces lamelles secondaires (9) comprenant un tranchant et les lamelles secondaires s'étendant globalement perpendiculairement à la lamelle principale (7).

2. Élément de moulage selon la revendication 1, **Caractérisé en ce que** l'espacement (P) entre la pluralité de lamelles secondaires (9) est globalement le même tout le long de la lamelle principale (7).
